# EUROPÄISCHE PATENTSCHRIFT

(11) **EP 2 426 383 B1**
(45) Veröffentlichungstag und Bekanntmachung des Hinweises auf die Patenterteilung: **08.01.2014**
(21) Anmeldenummer: 11176366.0
(22) Anmeldetag: 03.08.2011
(51) Int. Cl.: F16H 61/04

(54) **Verfahren zum Auflösen eiiner Zahn-auf-Zahn-Stellung**
Method for overcoming a tooth butt position
Procédé de suppression d'une position dent sur dent

(30) Priorität: 02.09.2010 DE 102010040159
(43) Veröffentlichungstag der Anmeldung: 07.03.2012
(73) Patentinhaber: ZF Friedrichshafen AG, 88038 Friedrichshafen (DE)
(72) Erfinder: Steinborn, Mario, 88046 Friedrichshafen (DE); Schneider, Florian, 88161 Lindenberg (DE)

(56) Entgegenhaltungen:
- DE-A1-102006 046 605
- DE-A1-102006 058 981
- DE-A1-102008 042 385
- US-A1- 2001 011 484

## Beschreibung

Die Erfindung betrifft ein Verfahren zum Auflösen einer Zahn-auf-Zahn-Stellung nach dem Oberbegriff des Anspruchs 1.

Bei der Ausführung einer Schaltung in einem automatisierten Schaltgetriebe unter Beteiligung eines formschlüssigen Schaltelements sowie bei der Ausführung der Schaltung unter Beteiligung eines zwischen zwei Getriebe geschalteten, formschlüssigen Schaltelements kann es zu Zahn-auf-Zahn-Stellungen kommen, die ein Schließen eines formschlüssigen Schaltelements verhindern.

Derartige Zahn-auf-Zahn-Stellungen müssen zur Ausführung einer Schaltung an einem formschlüssigen Schaltelement aufgelöst werden. Zur Auflösung solcher Zahn-auf-Zahn-Stellungen dienen entsprechende Aktuatoren.

Aus der DE 10 2006 046 605 A1 ist ein Verfahren zum Auflösen einer Zahn-auf-Zahn-Stellung in einem formschlüssigen Schaltelement eines Getriebes bekannt, wobei nach diesem Stand der Technik die Zahn-auf-Zahn-Stellung unter Verwendung einer Fahrkupplung oder einer Getriebebremse aufgelöst werden kann.

Aus der DE 10 2006 058 981 A1 ist ein Verfahren zum Auflösen einer Zahn-auf-Zahn-Stellung an einem zwischen zwei Getrieben positionierten Schaltelement bekannt, wobei auch nach diesem Stand der Technik ein Aktuator zur Auflösung der Zahn-auf-Zahn-Stellung verwendet wird, mithilfe dessen eine Eingangswelle bzw. eine Antriebswelle eines nachgeschalteten Getriebes verdreht werden kann.

Um einen möglichst hohen Schaltungskomfort zu gewährleisten, müssen Zahn-auf-Zahn-Stellungen möglichst schnell aufgelöst werden, um Schaltzeiten so kurz wie möglich zu halten. Mit den aus dem Stand der Technik bekannten Verfahren zur Auflösung einer Zahn-auf-Zahn-Stellung kann es jedoch unter Umständen vorkommen, dass ein sogenanntes Synchrondrehzahlfenster für eine antriebsseitige bzw. eingangsseitige Drehzahl des jeweiligen formschlüssigen Schaltelements verlassen wird, wodurch es dann erforderlich ist, die Schaltungsausführung abzubrechen und vor einer erneuten Schaltungsausführung zunächst erneut zu synchronisieren. Hierdurch werden dann lange Schaltzeiten verursacht, die den Schaltkomfort negativ beeinflussen.

Es besteht daher Bedarf an einem Verfahren zum Auflösen einer Zahn-auf-Zahn-Stellung an einem formschlüssigen Schaltelement, mithilfe dessen kurze Schaltzeiten und damit ein hoher Schaltkomfort gewährleistet werden kann.

Hiervon ausgehend liegt der vorliegenden Erfindung das Problem zu Grunde, ein neuartiges Verfahren zum Auflösen einer Zahn-auf-Zahn-Stellung zu schaffen.

Dieses Problem wird durch ein Verfahren gemäß Anspruch 1 gelöst. Erfindungsgemäß wird dann, wenn eine aufzulösende Zahn-auf-Zahn-Stellung erkannt wird, abhängig von einer antriebsseitigen bzw. eingangseitigen Drehzahl des formschlüssigen Schaltelements, abhängig von einer Synchrondrehzahl desselben und abhängig von der zum Auflösen einer Zahn-auf-Zahn-Stellung prinzipiell zur Verfügung stehenden Aktuatoren mindestens ein Aktuator ausgewählt, unter dessen Verwendung die antriebsseitige bzw. eingangseitige Drehzahl des formschlüssigen Schaltelements der Synchrondrehzahl desselben angenähert wird.

Mit dem erfindungsgemäßen Verfahren wird erstmals vorgeschlagen, dann, wenn eine aufzulösende Zahn-auf-Zahn-Stellung an einem formschlüssigen Schaltelement erkannt wird, abhängig von einer antriebsseitigen bzw. eingangsseitigen Drehzahl des formschlüssigen Schaltelements, abhängig von einer Synchrondrehzahl desselben und abhängig von der zum Auflösen der Zahn-auf-Zahn-Stellung prinzipiell zur Verfügung stehenden Aktuatoren mindestens einen Aktuator auszuwählen, unter Verwendung dessen die antriebsseitige bzw. eingangsseitige Drehzahl des formschlüssigen Schaltelements der Synchrondrehzahl desselben angenähert werden kann.

Mit dem erfindungsgemäßen Verfahren kann sichergestellt werden, dass stets ein Aktuator zur Auflösung einer Zahn-auf-Zahn-Stellung verwendet wird, der die eingangsseitige bzw. antriebsseitige Drehzahl des formschlüssigen Schaltelements in der richtigen Richtung, nämlich in Richtung auf die Synchrondrehzahl, verändert.

Es wird demnach kein vordefinierter Aktuator zur Auflösung einer Zahn-auf-Zahn-Stellung verwendet, vielmehr wird aus einer Vielzahl von zur Verfügung stehenden Aktuatoren der unter Berücksichtigung der aktuellen Situation am Schaltelement geeignete Aktuator zur Auflösung der Zahn-auf-Zahn-Stellung ausgewählt.

Vorzugsweise wird mindestens ein Aktuator ausgewählt, unter dessen Verwendung die antriebsseitige bzw. eingangseitige Drehzahl die Synchrondrehzahl möglichst schnell kreuzt und/oder unter dessen Verwendung die antriebsseitige bzw. eingangseitige Drehzahl möglichst lange in einem Synchrondrehzahlfenster, welches um die Synchrondrehzahl herum definiert ist, verbleibt. Hiermit kann die zur Schaltungsausführung benötigte Zeit weiter reduziert werden.

Nach einer vorteilhaften Weiterbildung der Erfindung wird um die Synchrondrehzahl herum einerseits ein Synchrondrehzahlfenster mit einer oberen Synchrondrehzahlfenstergrenze und einer unteren Synchrondrehzahlfenstergrenze und andererseits ein Zieldrehzahlfenster mit einer oberen Zieldrehzahlfenstergrenze und einer unteren Zieldrehzahlfenstergrenze definiert, wobei die obere Zieldrehzahlfenstergrenze zwischen der Synchrondrehzahl und der oberen Synchrondrehzahlfenstergrenze und die untere Zieldrehzahlfenstergrenze zwischen der Synchrondrehzahl und der unteren Synchrondrehzahlfenstergrenze liegt bzw. verläuft, wobei dann, wenn die antriebsseitige bzw. eingangseitige Drehzahl des formschlüssigen Schaltelements zwischen der oberen Synchrondrehzahlfenstergrenze und der oberen Zieldrehzahlfenstergrenze liegt, zur Auflösung einer Zahn-auf-Zahn-Stellung ein Aktuator ausgewählt wird, der die antriebsseitige bzw. eingangseitige Drehzahl reduziert, vorzugsweise möglichst schnell unter Kreuzung der Synchrondrehzahl, wobei dann, wenn die antriebsseitige bzw. eingangseitige Drehzahl des formschlüssigen Schaltelements zwischen der unteren Synchrondrehzahlfenstergrenze und der unteren Zieldrehzahlfenstergrenze liegt, zur Auflösung einer Zahn-auf-Zahn-Stellung ein Aktuator ausgewählt wird, der die antriebsseitige bzw. eingangseitige Drehzahl erhöht, vorzugsweise möglichst schnell unter Kreuzung der Synchrondrehzahl, und wobei dann, wenn die antriebsseitige bzw. eingangseitige Drehzahl des formschlüssigen Schaltelements zwischen der oberen Zieldrehzahlfenstergrenze und der unteren Zieldrehzahlfenstergrenze liegt, zur Auflösung einer Zahn-auf-Zahn-Stellung mehrere Aktuatoren ausgewählt werden, vorzugsweise derart, dass die antriebsseitige bzw. eingangseitige Drehzahl möglichst lange im Synchrondrehzahlfenster oder auch Zieldrehzahlfenster verbleibt.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Schema eines Antriebsstrangs eines als Hybridfahrzeugs ausgebildeten Kraftfahrzeugs, bei welchem das erfindungsgemäße Verfahren einsetzbar ist;
- Fig. 2: ein Diagramm zur Verdeutlichung des erfindungsgemäßen Verfahrens; und
- Fig. 3: ein weiteres Diagramm zur weiteren Verdeutlichung des erfindungsgemäßen Verfahrens.

Die Erfindung betrifft ein Verfahren zum Auflösen einer Zahn-auf-Zahn-Stellung eines formschlüssigen Schaltelements, insbesondere eines getriebeinternen, formschlüssigen Schaltelements eines automatisierten Schaltgetriebes oder eines zwischen zwei Getriebe geschalteten, formschlüssigen Schaltelements.

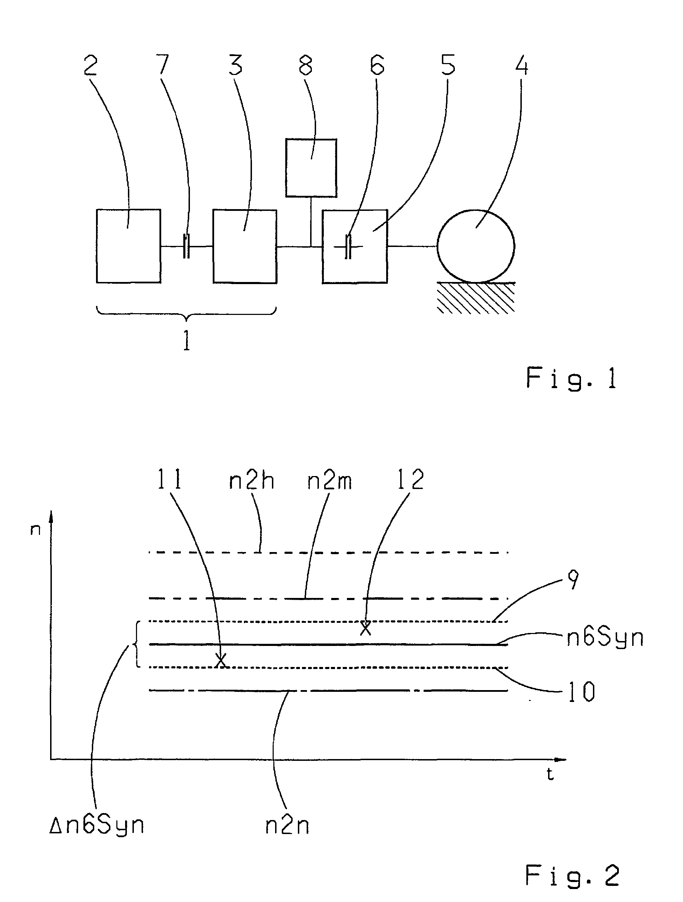

Fig. 1 zeigt exemplarisch einen Antriebsstrang, bei welchem das erfindungsgemäße Verfahren zum Einsatz kommen kann. So verfügt der Antriebsstrang der Fig. 1 über ein Antriebsaggregat 1, welches von einem Verbrennungsmotor 2 und einer elektrischen Maschine 3 gebildet ist.

Zwischen das Antriebsaggregat 1 und einen Abtrieb 4 ist ein automatisiertes Schaltgetriebe 5 geschaltet, welches mehrere formschlüssige Schaltelemente 6 umfasst. Zwischen dem Verbrennungsmotor 2 und der elektrischen Maschine 3 des Antriebsaggregats 1 ist eine Fahrkupplung 7 geschaltet, die dann, wenn der Verbrennungsmotor 2 vom Abtrieb 4 abgekoppelt ist, geöffnet ist, und die dann, wenn der Verbrennungsmotor 2 an den Abtrieb 4 angekoppelt ist, geschlossen ist. Ein solcher Antriebsstrang wird auch als Parallelhybrid-Antriebsstrang bezeichnet.

Ferner verfügt gemäß Fig. 1 der Antriebsstrang über eine getriebeeingangsseitige Getriebebremse 8.

Bereits an dieser Stelle sei darauf hingewiesen, dass das erfindungsgemäße Verfahren nicht auf die Verwendung an einem solchen Parallelhybrid-Antriebsstrang beschränkt ist. Vielmehr kann die Erfindung auch an anderen Antriebssträngen zum Einsatz kommen, deren Getriebe formschlüssige Schaltelemente umfassen.

Bei Ausführung einer Schaltung bzw. eines Gangwechsels in dem automatisierten Schaltgetriebe 5 des Antriebsstrangs der Fig. 1 kann an einem formschlüssigen Schaltelement 6 desselben eine sogenannte Zahn-auf-Zahn-Stellung auftreten, die aufgelöst werden muss. Zur Gewährleistung kurzer Schaltzeiten und zur Gewährleistung eines hohen Schaltkomforts müssen solche Zahn-auf-Zahn-Stellungen in möglichst kurzer Zeit aufgelöst werden.

Im Sinne der hier vorliegenden Erfindung wird vorgeschlagen, dass dann, wenn eine aufzulösende Zahn-auf-Zahn-Stellung erkannt wird, abhängig von einer antriebsseitigen bzw. eingangsseitigen Drehzahl des formschlüssigen Schaltelements 6, an welchem die aufzulösende Zahn-auf-Zahn-Stellung anliegt, abhängig von einer Synchrondrehzahl dieses formschlüssigen Schaltelements 6 sowie abhängig von der zum Auflösen der Zahn-auf-Zahn-Stellung prinzipiell zur Verfügung stehenden Aktuatoren mindestens ein Aktuator ausgewählt wird, unter dessen Verwendung die antriebsseitige bzw. eingangsseitige Drehzahl des formschlüssigen Schaltelements 6 der Synchrondrehzahl desselben angenähert wird, wobei der oder jeder Aktuator dann zur Auflösung der Zahn-auf-Zahn-Stellung verwendet wird. Im Antriebsstrang der Fig. 1 sind drei Aktuatoren vorhanden, mithilfe derer eine Zahn-auf-Zahn-Stellung unter Anpassung der antriebsseitigen bzw. eingangsseitigen Drehzahl eines formschlüssigen Schaltelements 6 des automatisierten Schaltgetriebes 5 aufgelöst werden kann, wobei es sich hierbei um die Anfahrkupplung 7, die elektrische Maschine 3 des Antriebsaggregats 1 und um die Getriebebremse 8 handelt.

Vorzugsweise wird abhängig von der antriebsseitigen bzw. eingangsseitigen Drehzahl des die aufzulösende Zahn-auf-Zahn-Stellung aufweisenden Schaltelements 6, abhängig von der Synchrondrehzahl desselben und abhängig von den prinzipiell zur Verfügung stehenden Aktuatoren derjenige Aktuator ausgewählt, unter dessen Verwendung die antriebsseitige bzw. eingangsseitige Drehzahl des Schaltelements 6 die Synchrondrehzahl desselben kreuzt, nämlich möglichst schnell kreuzt.

Ferner wird vorzugsweise derjenige Aktuator ausgewählt, unter Verwendung dessen die antriebsseitige bzw. eingangsseitige Drehzahl des Schaltelements 6 möglichst lange in einem Synchrondrehzahlfenster bleibt, welches um die Synchrondrehzahl herum definiert ist.

Fig. 2 zeigt ein Diagramm, in welche über der Zeit t mehrere Drehzahlen n aufgetragen sind, nämlich einerseits eine Synchrondrehzahl n6Syn, die einer Synchrondrehzahl eines Schaltelements 6 entspricht, ein Synchrondrehzahlfenster Δn6Syn um die Synchrondrehzahl n6Syn herum, welches von einer oberen Synchrondrehzahlfenstergrenze 9 und einer unteren Synchronfensterdrehzahlgrenze 10 definiert ist, sowie mehrere mögliche Drehzahlen n2 des Verbrennungsmotors 2, nämlich eine relativ niedrige Drehzahl n2n, eine relativ hohe Drehzahl n2h und eine mittlere Drehzahl n2m des Verbrennungsmotors 2. Die Synchrondrehzahl n6Syn für ein Schaltelement 6 ergibt sich aus der Abtriebsdrehzahl des Antriebsstrangs multipliziert mit der Übersetzung des einzulegenden Zielgangs. Weiterhin sind in Fig. 2 exemplarisch zwei Zahn-auf-Zahn-Stellungen 11 und 12 visualisiert, die an dem formschlüssigen Schaltelement 6 auftreten, wobei die Zahn-auf-Zahn-Stellung 11 bei einer eingangsseitigen bzw. antriebsseitigen Drehzahl des formschlüssigen Schaltelements 6 auftritt, die unterhalb der Synchrondrehzahl n6Syn liegt, und wobei die Zahn-auf-Zahn-Stellung 12 am Schaltelement 6 bei einer eingangsseitigen bzw. antriebsseitigen Drehzahl auftritt, die oberhalb der Synchrondrehzahl n6Syn liegt.

Wird eine solche Zahn-auf-Zahn-Stellung 11 bzw. 12 an einem formschlüssigen Schaltelement 6 festgestellt, so kann unter Kenntnis der antriebsseitigen bzw. eingangsseitigen Drehzahl des formschlüssigen Schaltelements 6, abhängig von der Synchrondrehzahl n6Syn desselben sowie abhängig von der zum Auflösen der Zahn-auf-Zahn-Stellung 11 bzw. 12 prinzipiell zur Verfügung stehenden Aktuatoren mindestens ein Aktuator ausgewählt werden, unter Verwendung dessen die antriebsseitige bzw. eingangsseitige Drehzahl des formschlüssigen Schaltelements 6 der Synchrondrehzahl n6Syn angenähert wird, nämlich derart, dass die antriebsseitige bzw. eingangsseitige Drehzahl die Synchrondrehzahl n6Syn möglichst schnell kreuzt und/oder unter dessen Verwendung die antriebsseitige bzw. eingangsseitige Drehzahl möglichst lange in dem Synchrondrehzahlfenster Δn6Syn verbleibt.

Für die Zahn-auf-Zahn-Stellung 11 der Fig. 2 bedeutet dies, dass zur Auflösung derselben mindestens ein Aktuator gewählt wird, mithilfe dessen die eingangsseitige bzw. antriebsseitige Drehzahl des formschlüssigen Schaltelements 6 angehoben bzw. vergrößert werden kann, wobei dies in Fig. 2 zum Beispiel über die Fahrkupplung 7 dann erfolgen kann, wenn Verbrennungsmotor 2 zum Beispiel die mittlere Drehzahl n2m oder die relativ hohe Drehzahl n2h aufweist. Weist hingegen der Verbrennungsmotor 2 die relativ geringe Drehzahl n2n auf, so kann über Schließen der Fahrkupplung 7 die antriebsseitige bzw. eingangsseitige Drehzahl des formschlüssigen Schaltelements 6 nicht in Richtung auf die Synchrondrehzahl n6Syn angenähert werden, vielmehr kann dies dann im Ausführungsbeispiel der Fig. 2 ausschließlich über die elektrische Maschine 3 erfolgen.

Liegt hingegen die Zahn-auf-Zahn-Stellung 12 vor, so wird mindestens ein Aktuator zur Auflösen derselben ausgewählt und verwendet, mithilfe dessen die eingangsseitige bzw. antriebsseitige Drehzahl des formschlüssigen Schaltelements 6 in Richtung auf die Synchrondrehzahl n6Syn verringert werden kann, wobei hierzu zumindest die Getriebebremse 8 zur Verfügung steht.

Dann, wenn der Verbrennungsmotor 2 zum Beispiel die relativ niedrige Drehzahl n2n aufweist, kann hierzu auch die Fahrkupplung 7 geschlossen werden. Ebenfalls kann über einen generatorischen und damit bremsenden Betrieb der elektrischen Maschine 3 diese Drehzahlanpassung durchgeführt werden.

Wie bereits ausgeführt, wird aus den zur Verfügung stehenden Aktuatoren vorzugsweise derjenige ausgewählt, mithilfe dessen gewährleistet werden kann, dass die antriebsseitige bzw. eingangsseitige Drehzahl des die zu lösende Zahn-auf-Zahn-Stellung aufweisenden Schaltelements 6 möglichst schnell die Synchrondrehzahl n6Syn desselben kreuzt, und zwar derart, dass ferner dieselbe möglichst lange im Synchrondrehzahlfenster Δn6Syn verbleibt.

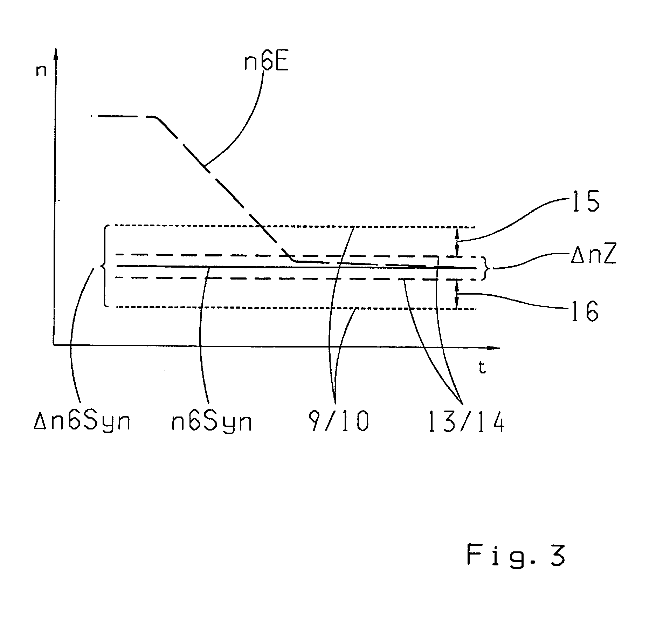

Weitere vorteilhafte Details des erfindungsgemäßen Verfahrens ergeben sich aus dem Diagramm der Fig. 3, wobei auch in Fig. 3 über der Zeit t mehrere Drehzahlen n aufgetragen sind, nämlich zusätzlich zu der bereits erwähnten Synchrondrehzahl n6Syn und dem bereits erwähnten Synchrondrehzahlfenster Δ n6Syn eine eingangsseitige bzw. antriebsseitige Drehzahl n6E eines formschlüssigen Schaltelements 6 sowie ein Zieldrehzahlfenster ΔnZ, welches von einer oberen Zieldrehzahlfenstergrenze 13 und einer unteren Zieldrehzahlfenstergrenze 14 definiert ist.

Gemäß Fig. 3 ist das Zieldrehzahlfenster ΔnZ sowie das Synchrondrehzahlfenster Δ n6Syn um die Synchrondrehzahl n6Syn herumgelegt, wobei die obere Zieldrehzahlfenstergrenze 13 zwischen der Synchrondrehzahl n6Syn und der oberen Synchrondrehzahlfenstergrenze 9 liegt, und wobei die untere Zieldrehzahlfenstergrenze 14 zwischen der Synchrondrehzahl n6Syn und der unteren Synchrondrehzahlfenstergrenze 10 liegt.

Nach einer vorteilhaften Weiterbildung der Erfindung ist vorgesehen, dass dann, wenn die antriebsseitige bzw. eingangsseitige Drehzahl n6E des die aufzulösende Zahn-auf-Zahn-Stellung aufweisenden Schaltelements 6 zwischen der oberen Synchrondrehzahlfenstergrenze 9 und der oberen Zielfensterdrehzahlgrenze 13 liegt, also im Bereich 15 der Fig. 3, zur Auflösung der Zahn-auf-Zahn-Stellung ein Aktuator ausgewählt wird, der die antriebsseitige bzw. eingangsseitige Drehzahl n6E reduziert, nämlich möglichst schnell unter Kreuzung der Synchrondrehzahl n6Syn.

Dann hingegen, wenn in der Variante der Fig. 3 die antriebsseitige bzw. eingangsseitige Drehzahl n6E des die aufzulösende Zahn-auf-Zahn-Stellung aufweisenden Schaltelements 6 im Bereich 16 der Fig. 3 liegt, also zwischen der unteren Synchronfensterdrehzahlgrenze 10 und der unteren Zielfensterdrehzahlgrenze 14, so wird ein Aktuator zur Auflösung der Zahn-auf-Zahn-Stellung ausgewählt, der die antriebsseitige bzw. eingangsseitige Drehzahl erhöht, nämlich möglichst schnell wiederum unter Kreuzung der Synchrondrehzahl n6Syn.

In den Bereichen 15 und 16 wird vorzugsweise ausschließlich jeweils ein Aktuator ausgewählt und zur Auflösung der Zahn-auf-Zahn-Stellung aktiviert.

Dann, wenn in der Variante der Fig. 3 die eingangsseitige Drehzahl n6E des die aufzulösende Zahn-auf-Zahn-Stellung aufweisenden Schaltelements 6 innerhalb des Zieldrehzahlfensters ΔnZ liegt, also zwischen der oberen Zielfensterdrehzahlgrenze 13 und der unteren Zielfensterdrehzahlgrenze 14, werden zur Auflösung der Zahn-auf-Zahn-Stellung mehrere Aktuatoren ausgewählt, zur Aktivierung vorbereitet und vorzugsweise nacheinander derart aktiviert, dass die antriebsseitige bzw. eingangsseitige Drehzahl n6E möglichst lange im Synchrondrehzahlfenster Δn6Syn bleibt, nämlich vorzugsweise möglichst lange im Zieldrehzahlfenster ΔnZ. Die Reihenfolge der Aktivierung der ausgewählten Aktuatoren wird hierbei auch festgelegt bzw. bestimmt.

Sollte die antriebsseitige bzw. eingangsseitige Drehzahl n6E des die aufzulösende Zahn-auf-Zahn-Stellung aufweisenden Schaltelements 6 entweder oberhalb der oberen Synchrondrehzahlfenstergrenze 9 oder unterhalb der unteren Synchrondrehzahlfenstergrenze 10 liegen, wird der Schaltvorgang abgebrochen und es erfolgt keine Auflösung der Zahn-auf-Zahn-Stellung durch Auswahl und Aktivierung mindestens einer der Aktuatoren auf die oben beschriebene Art und Weise.

Wie bereits ausgeführt, erfolgt die Auswahl des oder jedes Aktuators für die Auflösung einer Zahn-auf-Zahn-Stellung abhängig von der antriebsseitigen bzw. eingangsseitigen Drehzahl des entsprechenden formschlüssigen Schaltelements 6, abhängig von der Synchrondrehzahl desselben, abhängig von der Drehzahl eines Antriebsaggregats bzw. Antriebsaggregatteils, nämlich in Fig. 1 abhängig von der Drehzahl des Verbrennungsmotors 2, sowie abhängig von Bauteilkenngrößen prinzipiell zur Verfügung stehenden Aktuatoren, nämlich in Fig. 1 in Abhängigkeit von Bauteilkenngrößen der Fahrkupplung 7, der elektrischen Maschine 3 sowie der Getriebebremse 8. Bei diesen Bauteilkenngrößen handelt es sich insbesondere um die mit den Aktuatoren realisierbare Dynamik hinsichtlich der Beeinflussung der antriebsseitigen bzw. eingangsseitigen Drehzahl des die aufzulösende Zahn-auf-Zahn-Stellung aufweisenden Schaltelements 6 sowie um diesbezügliche Beeinflussungsgrenzen.

Erfindungsgemäß wird demnach vorgeschlagen, bereits vor der Auflösung einer Zahn-auf-Zahn-Stellung an einem Schaltelement 6 abzuschätzen, welcher der prinzipiell zur Verfügung stehenden Aktuatoren am besten geeignet ist. Dabei wird derjenige Aktuator 6 ausgewählt, der die eingangsseitige bzw. antriebsseitige Drehzahl des entsprechenden Schaltelements derart beeinflusst, dass dieselbe die Synchrondrehzahl kreuzt und möglichst lange in einem Drehzahlfenster verbleibt.

Im Sinne der Erfindung kann ausschließlich ein einziger Aktuator ausgewählt werden, alternativ ist es auch möglich, mehrere Aktuatoren zur Auflösung einer Zahn-auf-Zahn-Stellung auszuwählen und insbesondere nacheinander zu aktivieren, zum Beispiel dann, wenn festgestellt wird, dass bei Verwendung eines ersten Aktuators nach Kreuzen der Synchrondrehzahl sich die eingangsseitige bzw. antriebsseitige Drehzahl zu stark von der Synchrondrehzahl entfernt, um dann durch Deaktivieren des zuvor aktivierten Aktuators und durch Aktivieren eines bereits vorbereiteten, jedoch noch nicht aktivieren Aktuators die antriebsseitige bzw. eingangsseitige Drehzahl des Schaltelements wieder in Richtung auf die Synchrondrehzahl desselben zu führen. Durch die Auswahl und Vorbereitung mehrere Aktuatoren können Totzeiten bei der Ansteuerung der Aktuatoren vermieden werden. Bezugszeichen
- 1: Antriebsaggregat
- 2: Verbrennungsmotor
- 3: elektrische Maschine
- 4: Abtrieb
- 5: Getriebe
- 6: Schaltelement
- 7: Fahrkupplung
- 8: Getriebebremse
- 9: obere Synchrondrehzahlfenstergrenze
- 10: untere Synchrondrehzahlfenstergrenze
- 11: Zahn-auf-Zahn-Stellung
- 12: Zahn-auf-Zahn-Stellung
- 13: obere Zieldrehzahlfenstergrenze
- 14: untere Zieldrehzahlfenstergrenze
- 15: Bereich
- 16: Bereich

## Patentansprüche

1. Verfahren zum Auflösen einer Zahn-auf-Zahn-Stellung eines formschlüssigen Schaltelements eines Getriebes oder eines formschlüssigen Schaltelements zwischen zwei Getrieben, wobei die Zahn-auf-Zahn-Stellung durch Verwendung eines Aktuators, insbesondere durch Verwendung einer Getriebebremse oder durch Verwendung einer Fahrkupplung, aufgelöst wird, **dadurch gekennzeichnet, dass** dann, wenn eine aufzulösende Zahn-auf-Zahn-Stellung erkannt wird, abhängig von einer antriebsseitigen bzw. eingangseitigen Drehzahl des formschlüssigen Schaltelements, abhängig von einer Synchrondrehzahl desselben und abhängig von der zum Auflösen einer Zahn-auf-Zahn-Stellung prinzipiell zur Verfügung stehenden Aktuatoren mindestens ein Aktuator ausgewählt wird, unter dessen Verwendung die antriebsseitige bzw. eingangseitige Drehzahl des formschlüssigen Schaltelements der Synchrondrehzahl desselben angenähert wird.

2. Verfahren nach Anspruch 1, **dadurch gekennzeichnet, dass** mindestens ein Aktuator ausgewählt wird, unter dessen Verwendung die antriebsseitige bzw. eingangseitige Drehzahl die Synchrondrehzahl kreuzt.

3. Verfahren nach Anspruch 2, **dadurch gekennzeichnet, dass** mindestens ein Aktuator ausgewählt wird, unter dessen Verwendung die antriebsseitige bzw. eingangseitige Drehzahl die Synchrondrehzahl möglichst schnell kreuzt.

4. Verfahren nach einem der Ansprüche 1 bis 3, **dadurch gekennzeichnet, dass** mindestens ein Aktuator ausgewählt wird, unter dessen Verwendung die antriebsseitige bzw. eingangseitige Drehzahl möglichst lange in einem Synchrondrehzahlfenster, welches um die Synchrondrehzahl herum definiert ist, bleibt.

5. Verfahren nach einem der Ansprüche 1 bis 4, **dadurch gekennzeichnet, dass** um die Synchrondrehzahl herum einerseits ein Synchrondrehzahlfenster mit einer oberen Synchrondrehzahlfenstergrenze und einer unteren Synchrondrehzahlfenstergrenze und andererseits ein Zieldrehzahlfenster mit einer oberen Zieldrehzahlfenstergrenze und einer unteren Zieldrehzahlfenstergrenze definiert ist, wobei die obere Zieldrehzahlfenstergrenze zwischen der Synchrondrehzahl und der oberen Synchrondrehzahlfenstergrenze und die untere Zieldrehzahlfenstergrenze zwischen der Synchrondrehzahl und der unteren Synchrondrehzahlfenstergrenze liegt bzw. verläuft, wobei dann, wenn die antriebsseitige bzw. eingangseitige Drehzahl des formschlüssigen Schaltelements zwischen der oberen Synchrondrehzahlfenstergrenze und der oberen Zieldrehzahlfenstergrenze liegt, zur Auflösung einer Zahn-auf-Zahn-Stellung ein Aktuator ausgewählt wird, der die antriebsseitige bzw. eingangseitige Drehzahl reduziert, wobei dann, wenn die antriebsseitige bzw. eingangseitige Drehzahl des formschlüssigen Schaltelements zwischen der unteren Synchrondrehzahlfenstergrenze und der unteren Zieldrehzahlfenstergrenze liegt, zur Auflösung einer Zahn-auf-Zahn-Stellung ein Aktuator ausgewählt wird, der die antriebsseitige bzw. eingangseitige Drehzahl erhöht, und wobei dann, wenn die antriebsseitige bzw. eingangseitige Drehzahl des formschlüssigen Schaltelements zwischen der oberen Zieldrehzahlfenstergrenze und der unteren Zieldrehzahlfenstergrenze liegt, zur Auflösung einer Zahn-auf-Zahn-Stellung mehrere Aktuatoren ausgewählt werden.

6. Verfahren nach Anspruch 5, **dadurch gekennzeichnet, dass** dann, wenn die antriebsseitige bzw. eingangseitige Drehzahl des formschlüssigen Schaltelements zwischen der oberen Synchrondrehzahlfenstergrenze und der oberen Zieldrehzahlfenstergrenze liegt, zur Auflösung einer Zahn-auf-Zahn-Stellung ein Aktuator ausgewählt und aktiviert wird, der die antriebsseitige bzw. eingangseitige Drehzahl möglichst schnell unter Kreuzung der Synchrondrehzahl reduziert.

7. Verfahren nach Anspruch 5 oder 6, **dadurch gekennzeichnet, dass** dann, wenn die antriebsseitige bzw. eingangseitige Drehzahl des formschlüssigen Schaltelements zwischen der unteren Synchrondrehzahlfenstergrenze und der unteren Zieldrehzahlfenstergrenze liegt, zur Auflösung einer Zahn-auf-Zahn-Stellung ein Aktuator ausgewählt und aktiviert wird, der die antriebsseitige bzw. eingangseitige Drehzahl möglichst schnell unter Kreuzung der Synchrondrehzahl erhöht.

8. Verfahren nach einem der Ansprüche 5 bis 7, **dadurch gekennzeichnet, dass** dann, wenn die antriebsseitige bzw. eingangseitige Drehzahl des formschlüssigen Schaltelements zwischen der oberen Zieldrehzahlfenstergrenze und der unteren Zieldrehzahlfenstergrenze liegt, zur Auflösung einer Zahn-auf-Zahn-Stellung mehrere Aktuatoren ausgewählt, zur Aktivierung vorbereitet und vorzugweise in einer hierzu bestimmten Reihenfolge nacheinander derart aktiviert werden, dass die antriebsseitige bzw. eingangseitige Drehzahl möglichst lange im Synchrondrehzahlfenster, vorzugsweise im Zieldrehzahlfenster, bleibt.

9. Verfahren nach einem der Ansprüche 5 bis 8, **dadurch gekennzeichnet, dass** dann, wenn die antriebsseitige bzw. eingangseitige Drehzahl des formschlüssigen Schaltelements oberhalb der oberen Synchrondrehzahlfenstergrenze oder unterhalb der unteren Synchrondrehzahlfenstergrenze liegt, der Schaltvorgang abgebrochen wird.

10. Verfahren nach einem der Ansprüche 1 bis 9, **dadurch gekennzeichnet, dass** die Auswahl des oder jedes zur Auflösung einer Zahn-auf-Zahn-Stellung auszuwählenden Aktuators und bei Auswahl mehrerer Aktuatoren die Auswahl der Aktivierungsreihenfolge derselben abhängig von der antriebsseitigen Drehzahl des Schaltelements, abhängig von der Synchrondrehzahl desselben, abhängig von einer Antriebsaggregatdrehzahl und abhängig von Bauteilkenngrößen der prinzipiell zur Verfügung stehenden Aktuatoren erfolgt.

11. Verfahren nach einem der Ansprüche 1 bis 10, **dadurch gekennzeichnet, dass** zur Auflösung einer Zahn-auf-Zahn-Stellung als Aktuator eine Getriebebremse und/oder eine Fahrkupplung und/oder eine elektrische Maschine ausgewählt wird.

## Claims

1. Method for overcoming a tooth butt position of a positively locking shift element of a transmission or of a positively locking shift element between two transmissions, wherein the tooth butt position is overcome by using an actuator, in particular by using a transmission brake or by using a clutch, **characterized in that** when a tooth butt position which is to be overcome is detected, at least one actuator is selected as a function of a drive-side or input-side rotational speed of the positively locking shift element, as a function of a synchronizing rotational speed thereof and as a function of the actuators which are mainly available to overcome a tooth butt position, during the use of which actuator the drive-side or input-side rotational speed of the positively locking shift element is approximated to the synchronizing rotational speed thereof.

2. Method according to Claim 1, **characterized in that** at least one actuator is selected during the use of which the drive-side or input-side rotational speed crosses the synchronizing rotational speed.

3. Method according to Claim 2, **characterized in that** at least one actuator is selected during the use of which the drive-side or input-side rotational speed crosses the synchronizing rotational speed as quickly as possible.

4. Method according to one of Claims 1 to 3, **characterized in that** at least one actuator is selected during the use of which the drive-side or input-side rotational speed remains as long as possible in a synchronizing rotational speed window which is defined around the synchronizing rotational speed.

5. Method according to one of Claims 1 to 4, **characterized in that** on the one hand a synchronizing rotational speed window with an upper synchronizing rotational speed window limit and a lower synchronizing rotational speed window limit and on the other hand a target rotational speed window with an upper target rotational speed window limit and a lower target rotational speed window limit are defined around the synchronization rotational speed, wherein the upper target rotational speed window limit lies or runs between the synchronizing rotational speed and the upper synchronizing rotational speed window limit and the lower target rotational speed window limit lies or runs between the synchronizing rotational speed and the lower synchronizing rotational speed window limit, wherein when the drive-side or input-side rotational speed of the positively locking shift element lies between the upper synchronizing rotational speed window limit and the upper target rotational speed window limit, an actuator which reduces the drive-side or input-side rotational speed is selected to overcome a tooth butt position, wherein when the drive-side or input-side rotational speed of the positively locking shift element lies between the lower synchronizing rotational speed window limit and the lower target rotational speed window limit an actuator which increases the drive-side or input-side rotational speed is selected to overcome a tooth butt position, and wherein when the drive-side or input-side rotational speed of the positively locking shift element lies between the upper target rotational speed window limit and the lower target rotational speed window limit a plurality of actuators are selected to overcome a tooth butt position.

6. Method according to Claim 5, **characterized in that** when the drive-side or input-side rotational speed of the positively locking shift element lies between the upper synchronizing rotational speed window limit and the upper target rotational speed window limit an actuator which reduces the drive-side or input-side rotational speed as quickly as possible while crossing the synchronizing rotational speed is selected and activated to overcome a tooth butt position.

7. Method according to Claim 5 or 6, **characterized in that** when the drive-side or input-side rotational speed of the positively locking shift element lies between the lower synchronizing rotational speed window limit and the lower target rotational speed window limit an actuator which increases the drive-side or input-side rotational speed as quickly as possible while crossing the synchronizing rotational speed is selected and activated to overcome a tooth butt position.

8. Method according to one of Claims 5 to 7, **characterized in that** when the drive-side or input-side rotational speed of the positively locking shift element lies between the upper target rotational speed window limit and the lower target rotational speed window limit a plurality of actuators are selected to overcome a tooth butt position, are prepared for activation and are preferably activated in succession in an order determined for this purpose such that the drive-side or input-side rotational speed remains for as long as possible in the synchronizing rotational speed window, preferably in the target rotational speed window.

9. Method according to one of Claims 5 to 8, **characterized in that** when the drive-side or input-side rotational speed of the positively locking shift element lies above the upper synchronizing rotational speed window limit or below the lower synchronizing rotational speed window limit the gear shifting process is aborted.

10. Method according to one of Claims 1 to 9, **characterized in that** the selection of the actuator, or of each actuator, to be selected to overcome a tooth butt position, and in the event of a plurality of actuators being selected the selection of the activation sequence thereof, are made as a function of the drive-side rotational speed of the shift element, as a function of the synchronizing rotational speed thereof, as a function of a drive unit rotational speed and as a function of component characteristic variables of the actuators which are mainly available.

11. Method according to one of Claims 1 to 10, **characterized in that** a transmission brake and/or a clutch and/or an electric machine are/is selected as an actuator in order to overcome a tooth butt position.

## Revendications

1. Procédé de suppression d'une position dent sur dent d'un élément de commutation à engagement positif d'une boîte de vitesses ou d'un élément de commutation à engagement positif entre deux boîtes de vitesses, la position dent sur dent étant supprimée en utilisant un actionneur, en particulier en utilisant un frein sur transmission ou en utilisant un embrayage de conduite, **caractérisé en ce que** lorsqu'une position dent sur dent à supprimer est détectée, au moins un actionneur est sélectionné en fonction d'une vitesse de rotation de l'élément de commutation à engagement positif du côté de l'entraînement ou du côté de l'entrée, en fonction d'une vitesse de rotation synchrone de celui-ci et en fonction des actionneurs en principe disponibles pour la suppression d'une position dent sur dent, la vitesse de rotation du côté de l'entraînement ou du côté de l'entrée de l'élément de commutation à engagement positif étant rapprochée de la vitesse de rotation synchrone de celui-ci en utilisant ledit actionneur.

2. Procédé selon la revendication 1, **caractérisé en ce qu'**au moins un actionneur est sélectionné, la vitesse de rotation du côté de l'entraînement ou du côté de l'entrée croisant la vitesse de rotation synchrone en utilisant ledit actionneur.

3. Procédé selon la revendication 2, **caractérisé en ce qu'**au moins un actionneur est sélectionné, la vitesse de rotation du côté de l'entraînement ou du côté de l'entrée croisant aussi rapidement que possible la vitesse de rotation synchrone en utilisant ledit actionneur.

4. Procédé selon l'une quelconque des revendications 1 à 3, **caractérisé en ce qu'**au moins un actionneur est sélectionné, la vitesse de rotation du côté de l'entraînement ou du côté de l'entrée restant le plus longtemps possible dans une fenêtre de vitesses de rotation synchrones qui est définie autour de la vitesse de rotation synchrone, en utilisant ledit actionneur.

5. Procédé selon l'une quelconque des revendications 1 à 4, **caractérisé en ce qu'**autour de la vitesse de rotation synchrone, d'une part, une fenêtre de vitesses de rotation synchrones avec une limite de fenêtre de vitesses de rotation synchrones supérieure et une limite de fenêtre de vitesses de rotation synchrones inférieure, et, d'autre part, une fenêtre de vitesses de rotation cibles avec une limite de fenêtre de vitesses de rotation cibles supérieure et une limite de fenêtre de vitesses de rotation cibles inférieure sont définies, la limite de fenêtre de vitesses de rotation cibles supérieure étant située ou s'étendant entre la vitesse de rotation synchrone et la limite de fenêtre de vitesses de rotation synchrones supérieure et la limite de fenêtre de vitesses de rotation cibles inférieure étant située ou s'étendant entre la vitesse de rotation synchrone et la limite de fenêtre de vitesses de rotation synchrones inférieure, et lorsque la vitesse de rotation du côté de l'entraînement ou du côté de l'entrée de l'élément de commutation à engagement positif se situe entre la limite de fenêtre de vitesses de rotation synchrones supérieure et la limite de fenêtre de vitesses de rotation cibles supérieure, pour supprimer une position dent sur dent, un actionneur étant sélectionné, lequel réduit la vitesse de rotation du côté de l'entraînement ou du côté de l'entrée, et lorsque la vitesse de rotation du côté de l'entraînement ou du côté de l'entrée de l'élément de commutation à engagement positif se situe entre la limite de fenêtre de vitesses de rotation synchrones inférieure et la limite de fenêtre de vitesses de rotation cibles inférieure, pour supprimer une position dent sur dent, un actionneur étant sélectionné, lequel augmente la vitesse de rotation du côté de l'entraînement ou du côté de l'entrée, et lorsque la vitesse de rotation du côté de l'entraînement ou du côté de l'entrée de l'élément de commutation à engagement positif se situe entre la limite de fenêtre de vitesses de rotation cibles supérieure et la limite de fenêtre de vitesses de rotation cibles inférieure, pour supprimer une position dent sur dent, plusieurs actionneurs étant sélectionnés.

6. Procédé selon la revendication 5, **caractérisé en ce que** lorsque la vitesse de rotation du côté de l'entraînement ou du côté de l'entrée de l'élément de commutation à engagement positif se situe entre la limite de fenêtre de vitesses de rotation synchrones supérieure et la limite de fenêtre de vitesses de rotation cibles supérieure, pour supprimer une position dent sur dent, un actionneur est sélectionné et activé, lequel réduit la vitesse de rotation du côté de l'entraînement ou du côté de l'entrée aussi rapidement que possible en croisant la vitesse de rotation synchrone.

7. Procédé selon la revendication 5 ou 6, **caractérisé en ce que** lorsque la vitesse de rotation du côté de l'entraînement ou du côté de l'entrée de l'élément de commutation à engagement positif se situe entre la limite de fenêtre de vitesses de rotation synchrones inférieure et la limite de fenêtre de vitesses de rotation cibles inférieure, pour supprimer une position dent sur dent, un actionneur est sélectionné et activé, lequel augmente la vitesse de rotation du côté de l'entraînement ou du côté de l'entrée aussi rapidement que possible en croisant la vitesse de rotation synchrone.

8. Procédé selon l'une quelconque des revendications 5 à 7, **caractérisé en ce que** lorsque la vitesse de rotation du côté de l'entraînement ou du côté de l'entrée de l'élément de commutation à engagement positif se situe entre la limite de fenêtre de vitesses de rotation cibles supérieure et la limite de fenêtre de vitesses de rotation cibles inférieure, pour supprimer une position dent sur dent, plusieurs actionneurs sont sélectionnés, préparés à l'activation et activés de préférence les uns après les autres dans une succession définie spécifiquement, de telle sorte que la vitesse de rotation du côté de l'entraînement ou du côté de l'entrée reste le plus longtemps possible dans la fenêtre de vitesses de rotation synchrones, de préférence dans la fenêtre de vitesses de rotation cibles.

9. Procédé selon l'une quelconque des revendications 5 à 8, **caractérisé en ce que** lorsque la vitesse de rotation du côté de l'entraînement ou du côté de l'entrée de l'élément de commutation à engagement positif se situe au-dessus de la limite de fenêtre de vitesses de rotation synchrones supérieure ou en dessous de la limite de fenêtre de vitesses de rotation synchrones inférieure, l'opération de commutation est interrompue.

10. Procédé selon l'une quelconque des revendications 1 à 9, **caractérisé en ce que** la sélection de l'actionneur ou de chaque actionneur devant être sélectionné pour supprimer une position dent sur dent et, en cas de sélection de plusieurs actionneurs, la sélection de la séquence d'activation de ces derniers en fonction de la vitesse de rotation du côté de l'entraînement de l'élément de commutation s'effectuent en fonction de la vitesse de rotation synchrone de ce dernier, en fonction d'une vitesse de rotation du groupe motopropulseur et en fonction de grandeurs caractérisantes de composants des actionneurs en principe disponibles.

11. Procédé selon l'une quelconque des revendications 1 à 10, **caractérisé en ce que** pour la suppression d'une position dent sur dent, on sélectionne comme actionneur un frein sur transmission et/ou un embrayage de conduite et/ou une machine électrique.
